# EUROPEAN PATENT SPECIFICATION

(11) **EP 3 196 856 B1**
(45) Date of publication and mention of the grant of the patent: **14.08.2019**
(21) Application number: 17155644.2
(22) Date of filing: 17.09.2009
(51) Int. Cl.: G08C 17/00, G05B 15/02, A47L 15/00, A47L 15/42, D06F 39/00, D06F 33/02, F24C 7/08, F24C 15/20, F25D 29/00

(54) **A CONTROL SYSTEM FOR A DOMESTIC APPLIANCE**
STEUERUNGSEINHEIT FÜR EIN HAUSHALTSGERÄT
SYSTÈME DE COMMANDE POUR UN APPAREIL MÉNAGER

(43) Date of publication of application: 26.07.2017
(62) Divisional of application: 09011840.7
(73) Proprietor: Electrolux Home Products Corporation N.V., 1130 Brussels (BE)
(72) Inventor: BENOLD, Frank, 33080 Porcia (PN) (IT); KAISER, Kersten, 91541 Rothenburg ob der Tauber (DE)
(74) Representative: Electrolux Group Patents

(56) References cited:
- EP-A1- 1 978 426
- EP-A1- 2 022 244
- EP-A2- 1 260 886
- WO-A-00/51090
- WO-A-2005/069245
- WO-A1-03/036397
- US-A1- 2005 097 478
- US-A1- 2006 125 649
- US-A1- 2007 057 792
- US-B1- 6 747 573

## Description

The present invention relates to a control system for a domestic appliance according to the preamble of claim 1. Further, the present invention relates to a domestic appliance with a control system.

Domestic appliances are controlled by one or more mechanical switches. Said switches are connected to the controlled component of the domestic appliance either by wires or wireless via a control device. The wireless switch often requires an own energy source, e.g. a battery, which has to be exchanged from time to time.

Another problem of the wireless switch is, that the user does not always recognize, if the signal from said switch has been really received by the control device of the domestic appliance.

US 2005/0097478 A1 discloses a graphical user interface for controlling a plurality of appliances connected via a wired or wireless communication network. The distribution of data and control signals is managed by a control server. The user interface allows the user to access and control the appliances from any location within an environment.

US 2007/0057792 A1 discloses a wireless array of input devices without any battery. An array of contacts is used to capture the inputs of a user. Said inputs can be wireless communicated by passive RFID technology. The functions of the contacts can be stored in a memory.

It is the object of the present invention to provide an improved control system for a domestic appliance and a corresponding domestic appliance with a control system, wherein the control system allows a low complexity of the domestic appliance.

This object is achieved by the control system for a domestic appliance according to claim 1.

According to the present invention the electric energy for sending the wireless signals is produced or producible by actuating the operating element, wherein the operating device is an integrated part of a pivoting or slidable component of the domestic appliance or the operating device is a stationary device arranged in the environment of said domestic appliance.

The core idea of the present invention is the combination of the operating device and the display, wherein the operating device generates the complete electric energy for the wireless signals and the display is a part of the control device and supplied by the power source of the domestic appliance. The display can show the status of the operating device, the control device and the domestic appliance. Thus, the user can definitely recognize, if the wireless signal from the operating device has been really received by the control device of the domestic appliance.

According to the preferred embodiment of the present invention the electric energy for sending the wireless signals is produced or producible by transforming the mechanical energy of the actuation of the operating element. For example, the electric energy for sending the wireless signals is produced or producible by at least one piezo-electric, magneto-strictive and/or magneto-dynamic element.

The electric energy for sending the wireless signals may be produced or producible by touching the operating element, wherein the human body of the user acts as a capacitor.

Alternatively or additionally, the electric energy for sending the wireless signals may be produced or producible by touching the operating element, wherein the temperature gradient between the finger or the hand of the user and the operating element is used.

For example, the domestic appliance is a cooking oven, wherein the operating device is arranged at the oven door and the display is arranged at a front panel of the cooking oven.

Further, the domestic appliance is a cooking hob, wherein the operating device is disposed at a distance from the cooking hob and the display is arranged on the surface of the cooking hob.

According to another example, the domestic appliance is a refrigerator, wherein the operating device is arranged at the refrigerator door and the display is arranged at a refrigerator cabinet of the refrigerator. An active part of the display may be arranged at the refrigerator cabinet and a passive part of the display is arranged at the refrigerator door of the refrigerator.

According to a further embodiment of the present invention, the domestic appliance is a dishwasher, wherein the operating device is disposed at a distance from the dishwasher and the display is arranged on a dishwasher door of the dishwasher. Preferably, the display is arranged on an upper narrow side of the dishwasher door.

According to another application of the present invention the domestic appliance is a washing machine, wherein the operating device is arranged at a front side of a soap drawer of the washing machine and the display is arranged at the front side of the cabinet of the washing machine.

At last, the domestic appliance may be an exhaust hood, wherein the operating device is disposed at a distance from the exhaust hood and the display is arranged at the exhaust hood.

Alternatively, the domestic appliance is an exhaust hood, wherein the operating device is disposed at a distance from the exhaust hood and the display is arranged on the surface of the cooking hob.

The object of the present invention is further achieved by a domestic appliance according to claim 15.

The domestic appliance according to the present invention comprises at least one control system as described above. The invention will be explained in more detail below by means of exemplary embodiments. Reference is thereby made to the accompanied drawings, wherein
- FIG 1: shows a schematic front view of a cooking oven with a control system according to a first embodiment of the present invention,
- FIG 2: shows a schematic top view of a cooking hob with the control system according to a second embodiment of the present invention,
- FIG 3: shows a schematic top view of a cooking hob with the control system according to a third embodiment of the present invention,
- FIG 4: shows a schematic perspective view of a refrigerator with the control system according to a fourth embodiment of the present invention,
- FIG 5: shows a schematic perspective view of a dishwasher with the control system according to a fifth embodiment of the present invention,
- FIG 6: shows a schematic perspective view of a washing machine with the control system according to a sixth embodiment of the present invention, and
- FIG 7: shows a schematic perspective view of an exhaust hood for a cooking hob with the control system according to a seventh embodiment of the present invention.

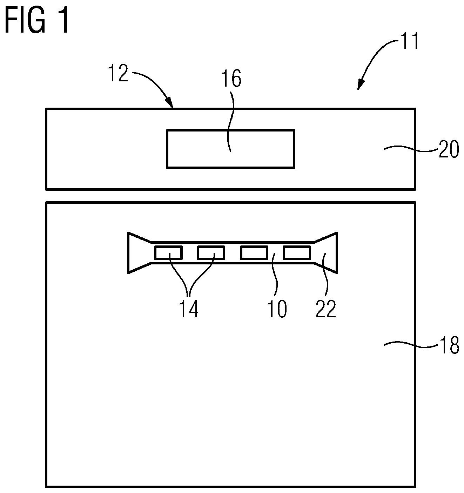

FIG 1 shows a schematic front view of a cooking oven 11 with a control system according to a first embodiment of the present invention. The cooking oven 11 comprises an oven cavity and an upper part above said oven cavity. The oven cavity is covered by an oven door 18. The upper part is covered by a front panel 20.

A door handle 22 is attached at the oven door 18. The door handle 22 comprises an operating device 10 with four operating elements 14. The operating device 10 with the four operating elements 14 is an integrated part of the door handle 22.

A display 16 is embedded within the front panel 20. The display is electrically connected to a control device 12 arranged behind the front panel 20. The control device 12 is provided for controlling the cooking oven 11. The display 16 illustrates the status of the cooking oven 11, the control device 12 and/or the operating elements 14.

There is a wireless connection between the operating device 10 and the control device 12. The operating element 14 sends a wireless signal to the control device 12, when said operating element 14 is actuated by the user. The required energy for the wireless signal is generated by pushing and/or touching the operating element 14.

Unlike the operating elements 14 the display 16 is electrically connected to the control device 12 and forms a part of said control device 12.

There are several possibilities for generating the electric energy for the wireless signal. According to a first example, the mechanical energy of the pushing and/or pressing the operating element 14 is transformed into electric energy. For example, this may be realized by a piezo-electric, magneto-strictive or a magneto-dynamic element.

According to a second example, the human body of the user may act as a capacitor while touching the operating element 14. The delivered charge of said capacitor can be used as electric energy. According to a third example, the temperature gradient between the finger of the user and the operating element 14 while pressing said operating element 14 is used for generating the electric energy.

The generated energy is small, but sufficient in order to send the wireless signal to the control device 12.

The inventive control system allows an arbitrary arrangement or positioning of the operating device 10 and the operating elements 14. Since the four operating elements 14 are attached at the door handle 22, there is no wiring connection between the oven door 18 and the control device 12. Further, no battery for the operating device 10 and no exchanges of batteries are required.

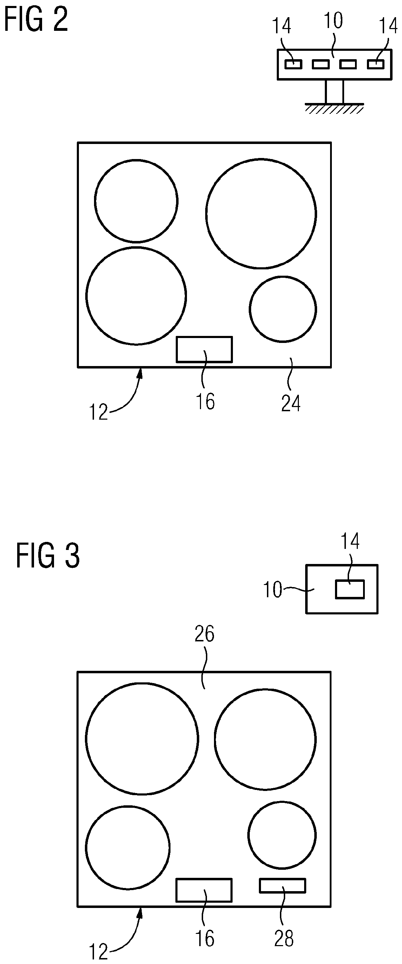

FIG 2 shows a schematic top view of a cooking hob 24 with the control system according to a second embodiment of the present invention. The cooking hob 24 comprises also a display 16 and a control device 12. The display 16 forms a part of the surface of the cooking hob 24. The control device 12 is arranged below the cooking hob 24.

Further, the cooking hob 24 comprises an operating device 10 with four operating elements 14. However, the operating device 10 with the four operating elements 14 is disposed at a distance from the cooking hob 24. The operating device 10 with the four operating elements 14 may be arranged at an arbitrary position in the environment of the cooking hob 24.

There is also a wireless connection between the operating device 10 and the control device 12 of the cooking hob 24. The operating element 14 sends a wireless signal to the control device 12, when said operating element 14 is actuated by the user. The required energy for the wireless signal is generated by pushing and/or touching the operating element 14 as described above.

FIG 3 shows a schematic top view of a cooking hob 26 with the control system according to a third embodiment of the present invention. The cooking hob 26 comprises also a display 16 on its surface and a control device 12 below it. Further, the cooking hob 26 comprises a touch screen 28. The touch screen 28 includes operating elements for activating single portions of the cooking hob 26 and for controlling the temperatures of said portions. The control device 12 is electrically connected to the display 16, the cooking hob 26 and the touch screen 28.

Additionally, the cooking hob 26 comprises an operating device 10 with one operating element 14 disposed at a distance from the cooking hob 26. Said operating element 14 is provided for switching on and off the cooking hob 24.

The operating element 14 is also wireless connected to the control device 12 of the cooking hob 26. The operating element 14 sends a wireless signal to the control device 12, when said operating element 14 is actuated by the user. The required energy for the wireless signal is generated by pushing and/or touching the operating element 14 as described above.

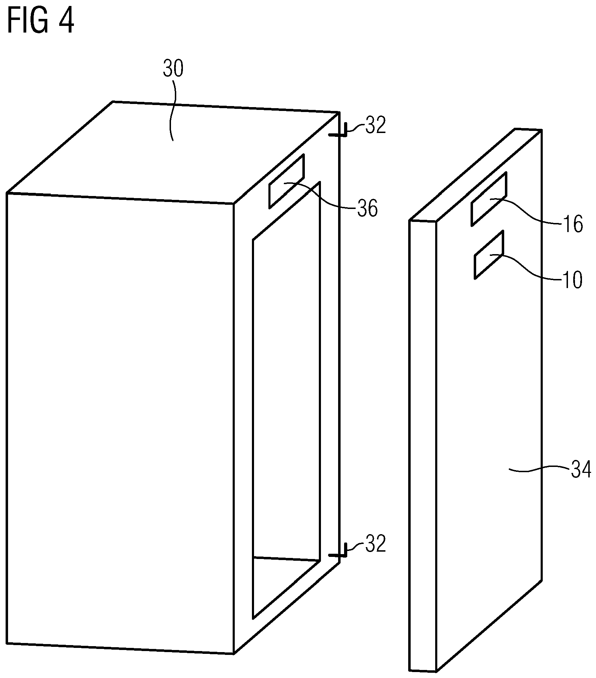

FIG 4 shows a schematic perspective view of a refrigerator with the control system according to a fourth embodiment of the present invention. The refrigerator comprises a refrigerator cabinet 30 and a refrigerator door 34.

The refrigerator door 34 is pivoting at the refrigerator cabinet 30 by door hinges 32. The door hinges 32 are attached at the right front side of the refrigerator cabinet 30. Thus, the rotational axis of the refrigerator door 34 is vertical. However, FIG 4 shows a demounted state of the refrigerator door 34. The refrigerator cabinet 30 comprises a control device 12, which is not shown in FIG 4.

The refrigerator cabinet 30 comprises a light source 36. The light source 36 is electrically connected to the control device 12 of the refrigerator cabinet 30. The light source 36 forms the rear part of a display 16. The proper display 16 is arranged within the refrigerator door 34. In a closed state of the refrigerator door 34, the light source 36 is positioned behind the display 16. The light source 36 may be formed by a set of light emitting diodes (LED) or as a projector. The display 16 may be formed by light guide elements and a projection surface. Thus, only the light source 36 requires electric energy, but the proper display 16 is a pure passive element in this embodiment.

The refrigerator door 34 comprises further an operating device 10. Said operating device 10 may comprise one or more operating elements 14. The operating element 14 is also wireless connected to the control device 12 of the refrigerator cabinet 30. The operating element 14 sends a wireless signal to the control device 12, when said operating element 14 is actuated by the user. The required energy for the wireless signal is generated by pushing and/or touching the operating element 14 as described above.

There is no electric connection between the refrigerator door 34 and the refrigerator cabinet 30. The refrigerator cabinet 30 includes only passive electric components.

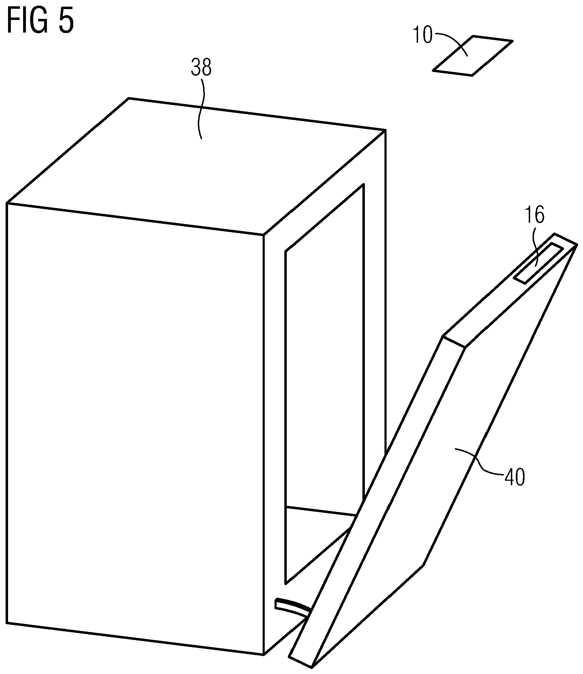

FIG 5 shows a schematic perspective view of a dishwasher with the control system according to a fifth embodiment of the present invention. The dishwasher comprises a dishwasher cabinet 38 and a dishwasher door 40.

The dishwasher door 40 is pivoting at the dishwasher cabinet 38. The rotational axis of the dishwasher door 38 is horizontal. The dishwasher door 40 comprises a display 16. Said display 16 is arranged within an upper narrow side of the dishwasher door 40.

The dishwasher comprises a control device 12, which is not shown in FIG 5. The control device 12 may be arranged within the dishwasher cabinet 38 or within the dishwasher door 40. The display 16 is electrically connected to the control device 12.

Further, the dishwasher comprises an operating device 10 with one or more operating elements 14. The operating device 10 is also wireless connected to the control device 12 of the dishwasher. The operating device 10 sends a wireless signal to the control device 12, when said operating device 10 is actuated by the user. The required energy for the wireless signal is generated by pushing and/or touching the operating device 10 as described above.

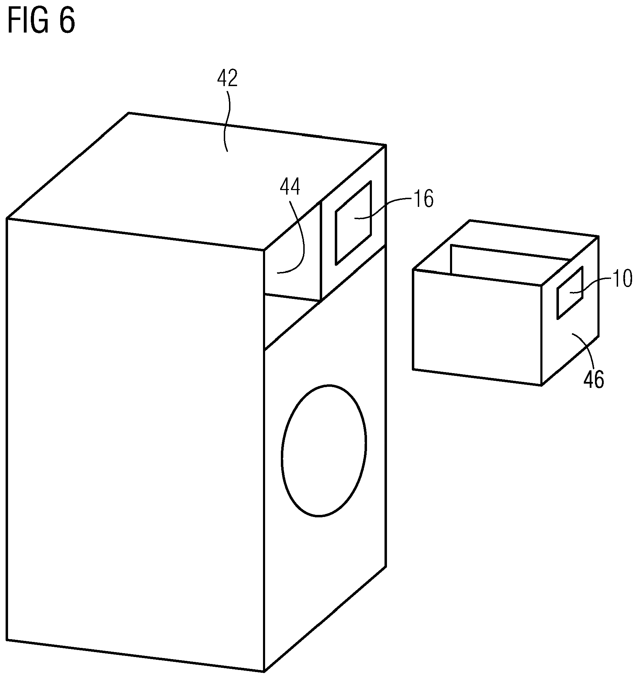

FIG 6 shows a schematic perspective view of a washing machine 42 with the control system according to a sixth embodiment of the present invention. The washing machine 42 comprises a display 16 and a stack 44. The stack 44 is provided for receiving a soap drawer 46.

The washing machine 42 comprises a control device 12, which is not shown in FIG 6. The control device 12 is arranged within the washing machine 42. The display 16 is electrically connected to the control device 12.

An operating device 10 is arranged at a front side of the soap drawer 46. The operating device 10 may include one or more operating elements 14. The operating device 10 is also wireless connected to the control device 12 of the washing machine 42. The operating device 10 sends a wireless signal to the control device 12, when said operating device 10 is actuated by the user. The required energy for the wireless signal is generated by pushing and/or touching the operating device 10 as described above.

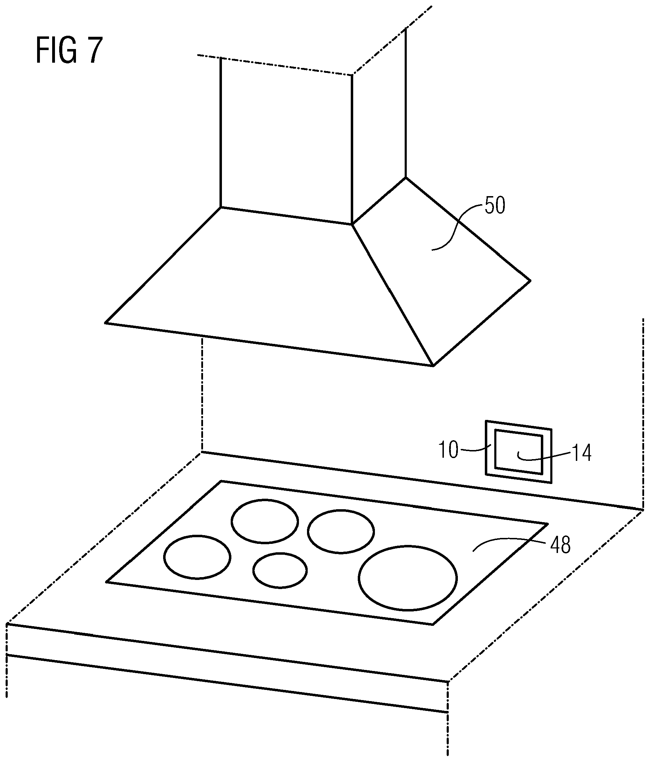

FIG 7 shows a schematic perspective view of an exhaust hood 50 for a cooking hob 48 with the control system according to a seventh embodiment of the present invention.

The exhaust hood 50 comprises a control device 12, which is not shown in FIG 7. For example, the control device 12 may be arranged within the exhaust hood 50 or below the cooking hob 48. Further, the exhaust hood 50 comprises a display 16, which is also not shown in FIG 7. The display 16 may be arranged on the cooking hob 48 or at an outer side of the exhaust hood 50. The display 16 is electrically connected to the control device 12.

An operating device 10 with one operating element 14 is arranged at a wall behind the cooking hob 48 and the exhaust hood 50. The operating element 14 is provided for switching on and switching off the exhaust hood 50.

The operating element 14 is also wireless connected to the control device 12. The operating element 14 sends a wireless signal to the control device 12, when said operating device 10 is actuated by the user. The required energy for the wireless signal is generated by pushing and/or touching the operating device 10 as described above.

The inventive control system does not require any wires between the operating elements 14 and the control device 12. Thus, the operating elements 14 can be easily positioned in a suitable place.

Further, the operating element 14 may be used as a general main switch for all domestic appliances in one place. Only one actuation of the operating element 14 is required in order to switch off the domestic appliances. In this case the user can be sure that none of the domestic appliances is still running.

### List of Reference Numerals

- 10: operating device
- 11: cooking oven
- 12: control device
- 14: operating element
- 16: display
- 18: oven door
- 20: front panel
- 22: door handle
- 24: cooking hob
- 26: cooking hob
- 28: touch screen
- 30: refrigerator cabinet
- 32: door hinge
- 34: refrigerator door
- 36: light source
- 38: dishwasher cabinet
- 40: dishwasher door
- 42: washing machine
- 44: stack
- 46: soap drawer
- 48: cooking hob
- 50: exhaust hood

## Claims

1. A control system for at least one domestic appliance, wherein:
- the control system includes an operating device (10) and a control device (12),
- the operating device (10) comprises at least one operating element (14),
- the operating element (14) being configured to send wireless signals to the control device (12),
- the control device (12) is configured to receive the wireless signals from the operating device (10),
- the control device (12) is electrically connected to at least one component of the domestic appliance,
- the control device (12) is configured to control at least one component of the domestic appliance,
- the control device (12) comprises a display (16) for showing the status of the operating device (10), the control device (12) and/or the at least one component of the domestic appliance,
- the operating element (14) operable as a general main switch for all domestic appliances in one place,
**characterised in that**
the electric energy for sending the wireless signals is produced or producible by actuating the operating element (14), wherein the operating device (10) is an integrated part of a pivoting (18, 34, 40) or slidable (46) component of the domestic appliance or the operating device (10) is a stationary device arranged in the environment of said domestic appliance.

2. The control system according to claim 1, wherein the operating element (14) is configured such that only one actuation of the operating element (14) is required in order to switch off all the domestic appliances.

3. The control system according to claim 1 or 2, wherein the electric energy for sending the wireless signals is produced or producible by at least one of:
- transforming the mechanical energy of the actuation of the operating element (14);
- at least one piezo-electric, magneto-strictive and/or magneto-dynamic element;
- touching the operating element (14), wherein the human body of the user acts as a capacitor; and
- touching the operating element (14), wherein the temperature gradient between the finger or the hand of the user and the operating element (14) is used.

4. The control system according to any one of the preceding claims, wherein the domestic appliance is a cooking oven (11), wherein the operating device (10) is arranged at the oven door (18) and the display (16) is arranged at a front panel (20) of the cooking oven (11) .

5. The control system according to any one of the claims 1 to 3,wherein the domestic appliance is a cooking hob (24; 26), wherein the operating device (10) is disposed at a distance from the cooking hob (24; 26) and the display (16) is arranged on the surface of the cooking hob (24; 26).

6. The control system according to claim 5, wherein the display (16) forms a part of the surface of the cooking hob (24), and the control device (12) is arranged below the cooking hob (24).

7. The control system according to any one of the claims 1 to 3, wherein the domestic appliance is a refrigerator (30, 34), wherein the operating device (10) is arranged at the refrigerator door (34) and the display (36) is arranged at a refrigerator cabinet (30) of the refrigerator (30, 34).

8. The control system according to claim 7,wherein an active part (36) of the display is arranged at the refrigerator cabinet (30) and a passive part (16) of the display is arranged at the refrigerator door (34) of the refrigerator (30, 34), wherein a light source (36) of the refrigerator (30), which is electrically connected to the control device (12), forms a rear part of the display (16), the display (16) arranged within the refrigerator door (34), the light source (36) in the closed state of the refrigerator door (34) positioned behind the display (16), the display formed by light guide elements and a projection surface.

9. The control system according to any one of the claims 1 to 3, wherein the domestic appliance is a dishwasher (38, 40), wherein the operating device (10) is disposed at a distance from the dishwasher (38, 40) and the display (36) is arranged on a dishwasher door (40) of the dishwasher (40).

10. The control system according to claim 9, wherein the display (36) is arranged on an upper narrow side of the dishwasher door (40), and/or wherein the control device (12) being arranged within the dishwasher cabinet (38) or within the dishwasher door (40).

11. The control system according to any one of the claims 1 to 3, wherein the domestic appliance is a washing machine (42), wherein the operating device (10) is arranged at a front side of a soap drawer (46) of the washing machine (42) and the display (36) is arranged at the front side of the cabinet of the washing machine (42), the control device arranged within the washing machine (42).

12. The control system according to any one of the claims 1 to 3, wherein the domestic appliance is an exhaust hood (50), wherein the operating device (10) is disposed at a distance from the exhaust hood (50) and the display (16) is arranged at the exhaust hood (50).

13. The control system according to any one of the claims 1 to 3, wherein the domestic appliance is an exhaust hood (50), wherein the operating device (10) is disposed at a distance from the exhaust hood (50) and the display (16) is arranged at an outer side of the exhaust hood (50) or on the surface of a cooking hob (48), the control device (12) arranged within the exhaust hood (50) or below the cooking hob (48), the operating device (10) having one operating element (14) and being arranged at a wall behind the cooking hob (48) and exhaust hood (50).

14. The control system according to any of the claims 1 to 13, wherein the operating device (10) is operable to generate the complete electric energy for the wireless signals, and wherein the display (16) is a part of the control device (12) and supplied by the power source of the domestic appliance (11; 24; 26; 30; 42; 50).

15. A domestic appliance with at least one control system, the domestic appliance (11; 24; 26; 30; 42; 50) including at least one control system according to any one of the preceding claims 1 to 14.

## Patentansprüche

1. Steuerungssystem für mindestens ein Haushaltsgerät, wobei:
- das Steuerungssystem eine Bedienvorrichtung (10) und eine Steuerungsvorrichtung (12) einschließt,
- die Bedienvorrichtung (10) mindestens ein Bedienelement (14) umfasst,
- das Bedienelement (14) konfiguriert ist, um drahtlose Signale an die Steuerungsvorrichtung (12) zu senden,
- die Steuerungsvorrichtung (12) konfiguriert ist, um die drahtlosen Signale von der Bedienvorrichtung (10) zu empfangen,
- die Steuerungsvorrichtung (12) elektrisch mit mindestens einer Komponente des Haushaltsgeräts verbunden ist,
- die Steuerungsvorrichtung (12) konfiguriert ist, um mindestens eine Komponente des Haushaltsgeräts zu steuern,
- die Steuerungsvorrichtung (12) eine Anzeige (16) umfasst, um den Status der Bedienvorrichtung (10), der Steuerungsvorrichtung (12) und/oder der mindestens einen Komponente des Haushaltsgeräts zu zeigen,
- wobei das Bedienelement (14) als allgemeiner Hauptschalter für alle Haushaltsgeräte an einem Ort funktional ist,
**dadurch gekennzeichnet, dass**
die elektrische Energie zum Senden der drahtlosen Signale produziert wird oder produzierbar ist, indem das Bedienelement (14) betätigt wird, wobei die Bedienvorrichtung (10) ein integriertes Teil einer schwenkbaren (18, 34, 40) oder schiebbaren (46) Komponente des Haushaltsgeräts ist, oder die Bedienvorrichtung (10) eine stationäre Vorrichtung ist, die in der Umgebung des Haushaltsgeräts angeordnet ist.

2. Steuerungssystem nach Anspruch 1, wobei das Bedienelement (14) so konfiguriert ist, dass nur eine Betätigung des Bedienelements (14) erforderlich ist, um alle der Haushaltsgeräte abzuschalten.

3. Steuerungssystem nach Anspruch 1 oder 2, wobei die elektrische Energie zum Senden der drahtlosen Signale produziert wird oder produzierbar ist durch mindestens eines von:
- Umwandeln der mechanischen Energie der Betätigung des Bedienelements (14);
- mindestens ein piezoelektrisches, magnetostriktives und/oder magnetodynamisches Element;
- Berühren des Bedienelements (14), wobei der menschliche Körper des Anwenders als Kondensator fungiert; und
- Berühren des Bedienelements (14), wobei der Temperaturgradient zwischen dem Finger oder der Hand des Anwenders und dem Bedienelement (14) verwendet wird.

4. Steuerungssystem nach einem der vorhergehenden Ansprüche, wobei das Haushaltsgerät ein Kochofen (11) ist, wobei die Bedienvorrichtung (10) an der Ofentür (18) angeordnet ist und die Anzeige (16) an einer Frontplatte (20) des Kochofens (11) angeordnet ist.

5. Steuerungssystem nach einem der vorhergehenden Ansprüche 1 bis 3, wobei das Haushaltsgerät ein Kochfeld (24; 26) ist, wobei die Bedienvorrichtung (10) in einem Abstand zu dem Kochfeld (24; 26) angeordnet ist und die Anzeige (16) auf der Oberfläche des Kochfelds (24; 26) angeordnet ist.

6. Steuerungssystem nach Anspruch 5, wobei die Anzeige (16) einen Teil der Oberfläche des Kochfelds (24) bildet, und die Steuerungsvorrichtung (12) unterhalb des Kochfelds (24) angeordnet ist.

7. Steuerungssystem nach einem der Ansprüche 1 bis 3, wobei das Haushaltsgerät ein Kühlschrank (30, 34) ist, wobei die Bedienvorrichtung (10) an der Kühlschranktür (34) angeordnet ist und die Anzeige (36) an einem Kühlschrankgehäuse (30) des Kühlschranks (30, 34) angeordnet ist.

8. Steuerungssystem nach Anspruch 7, wobei ein aktives Teil (36) der Anzeige an dem Kühlschrankgehäuse (30) angeordnet ist, und ein passives Teil (16) der Anzeige an der Kühlschranktür (34) des Kühlschranks (30, 34) angeordnet ist, wobei eine Lichtquelle (36) des Kühlschranks (30), die elektrisch mit der Steuerungsvorrichtung (12) verbunden ist, ein hinteres Teil der Anzeige (16) bildet, wobei die Anzeige (16) innerhalb der Kühlschranktür (34) angeordnet ist, die Lichtquelle (36) in dem geschlossenen Zustand der Kühlschranktür (34) hinter der Anzeige (16) positioniert ist, wobei die Anzeige durch Lichtleiterelemente und eine Projektionsfläche gebildet wird.

9. Steuerungssystem nach einem der Ansprüche 1 bis 3, wobei das Haushaltsgerät eine Spülmaschine (38, 40) ist, wobei die Bedienvorrichtung (10) in einem Abstand zu der Spülmaschine (38, 40) angeordnet ist und die Anzeige (36) auf einer Spülmaschinenklappe (40) der Spülmaschine (40) angeordnet ist.

10. Steuerungssystem nach Anspruch 9, wobei die Anzeige (36) auf einer oberen schmalen Seite der Spülmaschinenklappe (40) angeordnet ist, und/oder wobei die Steuerungsvorrichtung (12) innerhalb des Spülmaschinengehäuses (38) oder innerhalb der Spülmaschinenklappe (40) angeordnet ist.

11. Steuerungssystem nach einem der Ansprüche 1 bis 3, wobei das Haushaltsgerät eine Waschmaschine (42) ist, wobei die Bedienvorrichtung (10) an einer Vorderseite eines Waschmittelfachs (46) der Waschmaschine (42) angeordnet ist, und die Anzeige (36) an der Vorderseite des Gehäuses der Waschmaschine (42) angeordnet ist, wobei die Steuerungsvorrichtung innerhalb der Waschmaschine (42) angeordnet ist.

12. Steuerungssystem nach einem der Ansprüche 1 bis 3, wobei das Haushaltsgerät eine Dunstabzugshaube (50) ist, wobei die Bedienvorrichtung (10) in einem Abstand zu der Dunstabzugshaube (50) angeordnet ist und die Anzeige (16) an der Dunstabzugshaube (50) angeordnet ist.

13. Steuerungssystem nach einem der Ansprüche 1 bis 3, wobei das Haushaltsgerät eine Dunstabzugshaube (50) ist, wobei die Bedienvorrichtung (10) in einem Abstand zu der Dunstabzugshaube (50) angeordnet ist, und die Anzeige (16) an einer Außenseite der Dunstabzugshaube (50) oder auf der Oberfläche eines Kochfelds (48) angeordnet ist, die Steuerungsvorrichtung (12) innerhalb der Dunstabzugshaube (50) oder unterhalb des Kochfelds (48) angeordnet ist, wobei die Bedienvorrichtung (10) ein Bedienelement (14) aufweist und an einer Wand hinter dem Kochfeld (48) und der Dunstabzugshaube (50) angeordnet ist.

14. Steuerungssystem nach einem der Ansprüche 1 bis 13, wobei die Bedienvorrichtung (10) funktional ist, um die vollständige elektrische Energie für die drahtlosen Signale zu generieren, und wobei die Anzeige (16) Teil der Steuerungsvorrichtung (12) ist und von der Leistungsquelle des Haushaltsgeräts (11; 24; 26; 30; 42; 50) versorgt wird.

15. Haushaltsgerät mit mindestens einem Steuerungssystem, wobei das Haushaltsgerät (11; 24; 26; 30; 42; 50) mindestens ein Steuerungssystem gemäß einem der vorhergehenden Ansprüche 1 bis 14 einschließt.

## Revendications

1. Système de commande pour au moins un appareil ménager,
- le système de commande comprenant un dispositif opérationnel (10) et un dispositif de commande (12),
- le dispositif opérationnel (10) comprenant au moins un élément opérationnel (14),
- l'élément opérationnel (14) étant configuré pour envoyer des signaux sans fil au dispositif de commande (12),
- le dispositif de commande (12) étant configuré pour recevoir les signaux sans fil du dispositif opérationnel (10),
- le dispositif de commande (12) étant connecté électriquement à au moins un composant de l'appareil ménager,
- le dispositif de commande (12) étant configuré pour commander au moins un composant de l'appareil ménager,
- le dispositif de commande (12) comprenant un affichage (16) pour afficher l'état du dispositif opérationnel (10), du dispositif de commande (12) et/ou de l'au moins un composant de l'appareil ménager,
- l'élément opérationnel (14) étant actionnable comme interrupteur principal général pour tous les appareils ménagers en un seul endroit,
**caractérisé en ce que**
l'énergie électrique pour envoyer les signaux sans fil est produite ou peut être produite en actionnant l'élément opérationnel (14), le dispositif opérationnel (10) étant une partie intégrée d'un composant pivotant (18, 34, 40) ou coulissant (46) de l'appareil ménager ou le dispositif opérationnel (10) étant un dispositif fixe agencé dans l'environnement dudit appareil ménager.

2. Système de commande selon la revendication 1, l'élément opérationnel (14) étant configuré de telle sorte qu'un seul actionnement de l'élément opérationnel (14) est nécessaire pour éteindre tous les appareils ménagers.

3. Système de commande selon la revendication 1 ou 2, l'énergie électrique pour envoyer les signaux sans fil étant produite ou pouvant être produite par au moins l'un des éléments suivants :
- la transformation de l'énergie mécanique de l'actionnement de l'élément opérationnel (14) ;
- au moins un élément piézo-électrique, magnétostrictif et/ou magnéto-dynamique ;
- le contact de l'élément opérationnel (14), le corps humain de l'utilisateur agissant comme un condensateur ; et
- le contact avec l'élément opérationnel (14), le gradient de température entre le doigt ou la main de l'utilisateur et l'élément opérationnel (14) étant utilisé.

4. Système de commande selon l'une quelconque des revendications précédentes, l'appareil ménager étant un four de cuisson (11), le dispositif opérationnel (10) étant disposé sur la porte du four (18) et l'affichage (16) étant agencé sur un panneau frontal (20) du four de cuisson (11).

5. Système de commande selon l'une quelconque des revendications 1 à 3, l'appareil ménager étant une table de cuisson (24 ; 26), le dispositif opérationnel (10) étant disposé à distance de la table de cuisson (24 ; 26)
et l'affichage (16) étant agencé sur la surface de la table de cuisson (24 ; 26).

6. Système de commande selon la revendication 5, l'affichage (16) faisant partie de la surface de la table de cuisson (24), et le dispositif de commande (12) étant agencé sous la table de cuisson (24).

7. Système de commande selon l'une quelconque des revendications 1 à 3, l'appareil ménager étant un réfrigérateur (30, 34), le dispositif opérationnel (10) étant disposé sur la porte (34) du réfrigérateur et l'affichage (36) étant agencé sur une armoire de réfrigérateur (30) du réfrigérateur (30, 34).

8. Système de commande selon la revendication 7,une partie active (36) de l'écran étant disposée dans l'armoire de réfrigérateur (30) et une partie passive (16) de l'écran étant disposée dans la porte de réfrigérateur (34) du réfrigérateur (30, 34), une source lumineuse (36) du réfrigérateur (30), qui est connectée électriquement au dispositif de commande (12), forme une partie arrière de l'affichage (16), l'affichage (16) étant agencé à l'intérieur de la porte du réfrigérateur (34), la source lumineuse (36) à l'état fermé de la porte du réfrigérateur (34) étant placée derrière l'affichage (16), l'affichage étant formé par des éléments guides de lumière et une surface de projection.

9. Système de commande selon l'une quelconque des revendications 1 à 3, l'appareil ménager étant un lave-vaisselle (38, 40), le dispositif opérationnel (10) étant disposé à distance du lave-vaisselle (38, 40) et l'affichage (36) étant agencé sur une porte de lave-vaisselle (40) du lave-vaisselle (40).

10. Système de commande selon la revendication 9, l'affichage (36) étant agencé sur un côté étroit supérieur de la porte (40) du lave-vaisselle et/ou le dispositif de commande (12) étant agencé dans l'armoire du lave-vaisselle (38) ou dans la porte du lave-vaisselle (40).

11. Système de commande selon l'une quelconque des revendications 1 à 3, l'appareil ménager étant une machine à laver (42), le dispositif opérationnel (10) étant agencé sur une face avant d'un tiroir à savon (46) de la machine à laver (42) et l'affichage (36) étant agencé sur la face avant de l'armoire de la machine à laver (42), le dispositif de commande étant agencé dans la machine à laver (42).

12. Système de commande selon l'une quelconque des revendications 1 à 3, l'appareil ménager étant une hotte aspirante (50), le dispositif opérationnel (10) étant disposé à distance de la hotte aspirante (50) et l'affichage (16) étant agencé sur la hotte aspirante (50) .

13. Système de commande selon l'une quelconque des revendications 1 à 3, l'appareil ménager étant une hotte aspirante (50), le dispositif opérationnel (10) étant disposé à distance de la hotte aspirante (50) et l'affichage (16) étant agencé sur un côté extérieur de la hotte aspirante (50) ou sur la surface d'une plaque de cuisson (48), le dispositif de commande (12) étant agencé à l'intérieur de la hotte aspirante (50) ou sous la plaque de cuisson (48), le dispositif opérationnel (10) comportant un élément opérationnel (14) et étant agencé sur une paroi derrière la plaque de cuisson (48) et la hotte aspirante (50).

14. Système de commande selon l'une quelconque des revendications 1 à 13, le dispositif opérationnel (10) pouvant être actionnable pour générer l'énergie électrique complète pour les signaux sans fil, et l'affichage (16) faisant partie du dispositif de commande (12) et étant fourni par la source d'alimentation de l'appareil ménager (11 ; 24 ; 26 ; 30 ; 42 ; 50) .

15. Appareil ménager avec au moins un système de commande, l'appareil ménager (11 ; 24 ; 26 ; 30 ; 42 ; 50) comprenant au moins un système de commande selon l'une quelconque des revendications précédentes 1 à 14.
